# EUROPEAN PATENT SPECIFICATION

(11) **EP 2 980 015 B1**
(45) Date of publication and mention of the grant of the patent: **04.07.2018**
(21) Application number: 14772585.7
(22) Date of filing: 27.03.2014
(51) Int. Cl.: C01B 3/22

(54) **HIGH-CALORIE GAS MANUFACTURING PROCESS**
HERSTELLUNGSVERFAHREN FÜR EIN HOCHKALORISCHES GAS
PROCÉDÉ DE FABRICATION DE GAZ À TENEUR ÉLEVÉE EN CALORIES

(30) Priority: 29.03.2013 JP 2013071883
(43) Date of publication of application: 03.02.2016
(73) Proprietor: JFE Steel Corporation, Tokyo 100-0011 (JP)
(72) Inventor: SAIMA, Hitoshi, Tokyo 100-0011 (JP); ASAMI, Kenji, Kitakyushu-shi Fukuoka 808-0135 (JP)
(74) Representative: Hoffmann Eitle
(86) International application number: PCT/JP2014/058963
(87) International publication number: WO 2014/157553

(56) References cited:
- WO-A1-2011/127869
- DE-A1-102011 014 824
- JP-A- S63 202 694
- JP-A- 2011 105 523
- US-A1- 2009 249 692
- US-A1- 2011 263 916
- Zhu Yunhua: "Lower and Higher Heating Values of Hydrogen and Fuels", , 26 January 2015 (2015-01-26), XP055391748, Retrieved from the Internet: URL:http://hydrogen.pnl.gov/hydrogen-data/ lower-and-higher-heating-values-hydrogen-a nd-other-fuels [retrieved on 2017-07-18]

## Description

The present invention relates to a high calorific gas producing method. More specifically, the present invention relates to a high calorific gas producing method using decomposition of glycerin.

### BACKGROUND ART

It is known that glycerin is decomposed into carbon monoxide and hydrogen over a group VIII metal catalyst.

For example, Non-Patent Literatures 1 to 4 report decomposition reactions of glycerin over various group VIII metal catalysts.

In addition, these Non-Patent Literatures report Ru = Rh > Ni > Ir > Co > Pt > Pd > Fe as the order of activity of group VIII metal catalysts and further report that Ru is most active and among group VIII metals which are less expensive, Ni has higher activity. US2009/0249692 discloses a process for producing synthesis gas from glycerine and water on various catalysts.

### CITATION LIST

### NON PATENT LITERATURE

Non-Patent Literature 1: Toshihide Hirai and other three, "Development of Catalyst for Glycerin Steam Reforming Reaction," Proceedings of Petroleum-Petrochemical Symposium, vol. 34, p. 248 (2004)
Non-Patent Literature 2: Toshihide Hirai and other four, "Production of Hydrogen by Steam Reforming of Glycerin over Ruthenium Catalyst," Proceedings of Conference of the Japan Institute of Energy, vol. 14, p. 264 to 265 (2005)
Non-Patent Literature 3: Takuya Suenaga and other four, "Production of Hydrogen by Steam Reforming of Glycerin over Nickel Catalyst," Proceedings of Annual Conference of the Japan Petroleum Institute, vol. 49, p. 93 (2006)
Non-Patent Literature 4: Susumu Kitamura and other five, "Production of Hydrogen by Steam Reforming of Glycerin over Ni/CaO-ZrO2 Catalyst," Proceedings of Petroleum-Petrochemical Symposium, vol. 38, p. 229 (2008)

### SUMMARY OF INVENTION

### TECHNICAL PROBLEMS

The present inventors have studied the catalysts described in Non-Patent Literatures 1 to 4 above and revealed that in each case, the yield of hydrogen produced by steam reforming of glycerin is approximately 20 to 70% and that the selectivities of carbon monoxide, methane and carbon dioxide are 20 to 30%, 5 to 10% and 60 to 75%, respectively, and thus the proportion of carbon dioxide is the highest. As described in Non-Patent Literature 1, the yield of hydrogen was calculated with the yield of hydrogen at the time the reaction expressed by the following formula (1) had been completely progressed being defined as 100%.

C₃H₈O₃ + H₂O (steam) -> 3CO + 4H₂ (1)

The lower calorific values of hydrogen, carbon monoxide and methane are 2580 kcal/m³, 3020 kcal/m³ and 8560 kcal/m³, respectively.

Accordingly, the lower calorific value with the above gas composition having a low methane content and a high carbon dioxide content should be small and can be estimated to be about 1800 kcal/m³.

An object of the present invention is therefore to provide a high calorific gas producing method for obtaining high calorific gas by decomposing glycerin.

### SOLUTION TO PROBLEMS

The present inventors have made intensive studies to achieve the above object and as a result found that high calorific gas can be obtained by decomposing glycerin over iron ore, and the invention has been thus completed. Specifically, the present invention provides the following:
(1) A high calorific gas producing method according to claim 1.
(2) The high calorific gas producing method as above, wherein the iron ore has a specific surface area measured by a BET method of at least 10 m²/g.
(3) The high calorific gas producing method as above, wherein the iron ore has an iron content of at least 50%.

### ADVANTAGEOUS EFFECTS OF INVENTION

According to the present invention, there is provided a high calorific gas producing method for obtaining high calorific gas by decomposing glycerin, as described below.

The high calorific gas producing method of the invention is utilized for decomposing glycerin that is a by-product of production of biodiesel fuel (BDF) recently receiving attention. High calorific gas can be produced without increasing carbon dioxide emissions and thus, this method is very effective.

### BRIEF DESCRIPTION OF DRAWINGS

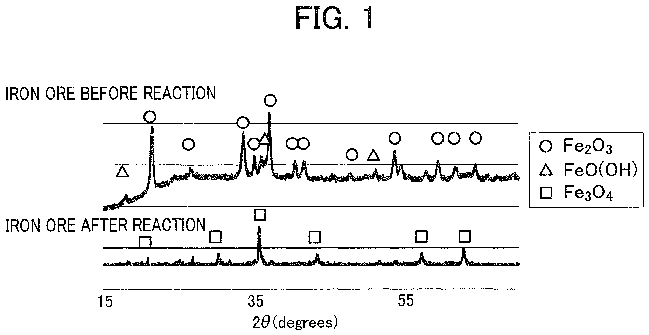

[FIG. 1] FIG. 1 is a graph showing X-ray diffractograms of iron ore used in decomposition of glycerin (steam reforming reaction) before and after the reaction.

### DESCRIPTION OF EMBODIMENTS

The high calorific gas producing method of the invention is a high calorific gas producing method for obtaining high calorific gas with a lower calorific value of 3,000 kcal/m³ or more by decomposing glycerin over iron ore.

The reason why high calorific gas can be obtained by decomposing glycerin over such iron ore is not apparent for details but can be assumed as described below.

Glycerin has a reactivity of 100% in the decomposition reaction at 800°C and according to a chemical equilibrium calculation, the composition of produced gas (dry gas basis) includes 62.6% hydrogen, 24.6% carbon monoxide, 12.8% carbon dioxide and 0.05% methane. The lower calorific value with this composition is about 2,360 kcal/m³.

It is revealed that when glycerin is decomposed over iron ore at 800°C, compared to the above composition calculated through the chemical equilibrium calculation, the selectivity of methane is much higher and the selectivity of carbon dioxide is much lower as shown in Examples to be described later. It is revealed that as a result, the lower calorific value of generated gas exceeds 3,000 kcal/m³ and increases to about 3,900 kcal/m³.

The above facts lead to the assumption that methane is directly generated in decomposition of glycerin over an iron ore.

The iron ore, conditions of glycerin decomposition and the like applied in the high calorific gas producing method of the invention will be described in detail below.

### <Iron Ore>

The iron ore used in the high calorific gas producing method of the invention is not particularly limited.

In the present invention, the iron ore may be solely used, or a mixture of the iron ore with a sintered ore which is obtained by mixing an iron ore with coal or lime, followed by baking, may be used.

Specific examples of the iron ore include a Robe River ore (pisolite ore), a Yandicoogina ore and a Carajas ore, which may be used alone or in combination of two or more. Alternatively, an iron ore in which several types of iron ores are mixed, such as a Pilbara blend ore, may be used.

In the high calorific gas producing method of the invention, the iron ore has a specific surface area measured by a BET method (hereinafter referred to as "BET specific surface area") of preferably at least 10 m²/g and more preferably at least 15 m²/g but preferably up to 200 m²/g.

With the BET specific surface area of the iron ore within the foregoing range, the selectivity of methane is increased and the iron ore itself has excellent mechanical strength, whereby gas having a further increased calorific value can be stably produced.

In the high calorific gas producing method of the invention, the iron ore has an iron content (iron concentration) of preferably at least 50% and more preferably at least 60%.

At the iron content of the iron ore within the foregoing range, the yield of gas tends to be high and therefore this is preferred.

FIG. 1 shows X-ray diffractograms of the iron ore used in decomposition of glycerin (steam reforming reaction) before and after the reaction.

As can be seen from FIG. 1, the iron ore before decomposition of glycerin is primarily composed of hematite (Fe₂O₃), whereas the iron ore after decomposition of glycerin has been reduced to magnetite (Fe₃O₄).

Therefore, the iron ore used in the high calorific gas producing method of the invention is, after use, usable as an iron-making material and owing to this, the amount of a reductant such as coke for use in reducing iron ore to metallic iron can be decreased.

### <Conditions of Decomposition>

In the high calorific gas producing method of the invention, the temperature in decomposition of glycerin (decomposition temperature) is between 600 to 900°C and more preferably 650 to 800°C because the selectivity of carbon dioxide can be suppressed and gas having a further increased calorific value can be produced.

The reaction through which the gas having the foregoing composition is produced upon decomposition of glycerin is an endothermic reaction requiring a slight amount of energy of 60 kcal/mol and therefore, a heat source is needed for promoting the reaction.

In the present invention, the heat source is not particularly limited. For instance, exhaust heat of a steel mill, specifically sensible heat of red-hot coke or slag, is advantageously used.

The pressure in decomposition of glycerin (decomposition pressure) is not particularly limited and preferably ranges from atmospheric pressure to 0.5 MPa in terms of cost, decomposition time and the like.

As described above, the high calorific gas producing method of the invention is utilized for decomposing glycerin that is a by-product of production of a biodiesel fuel (BDF) recently receiving attention (hereinafter called "by-product glycerin" in the following).

The by-product glycerin is produced as a by-product in the form of an aqueous solution (aqueous glycerin solution).

In decomposition of glycerin over iron ore, the selectivity of carbon dioxide is low as described above and therefore, even when an aqueous solution is used, the production of carbon dioxide upon the reaction (shift reaction) expressed by the following formula (2), which is progressed with coexistent water, is hardly progressed.

Accordingly, the high calorific gas producing method of the invention can be advantageously utilized for decomposing the by-product glycerin.

CO + H₂O - > CO₂ + H₂ (2)

In the high calorific gas producing method of the invention, the molar ratio between water and glycerin (water/glycerin) in the aqueous glycerin solution is 3 to 5 in terms of cost and handleability.

The BDF is sometimes produced without water and in such cases, the by-product glycerin is to be a mixture of glycerin and methanol. Methanol is decomposed as shown in the following formula (3) more easily than glycerin.

CH₃OH - > CO + 2H₂ (3)

The lower calorific value of gas produced by formula (3) is 2,730 kcal/m³ and therefore, a large amount of methanol tends to result in decrease of the calorific value of produced gas. However, when the by-product glycerin has a glycerin content of 30% or more, the lower calorific value of high calorific gas produced is not less than 3,000 kcal/m³. Since the actual by-product glycerin has a glycerin content of 70% or more, the presence of methanol causes substantially no problem and even if water is not added in producing the BDF, the object of the invention can be attained.

In addition, in the high calorific gas producing method of the invention, the residence time (W/F) expressed with the weight (W) of the iron ore relative to the gas flow rate (F) is preferably 2 to 20 g·hr/mol and more preferably 5 to 10 g·hr/mol.

### EXAMPLES

The high calorific gas producing method of the invention is described below in detail by way of examples. However, the present invention is not limited thereto.

### (Example 1)

Robe River ore (iron content: 57%, BET specific surface area: 16 m²/g) was used as the iron ore to decompose glycerin.

The decomposition conditions were set in which the molar ratio between water and glycerin (water/glycerin ratio) in the aqueous glycerin solution was 3.4, the residence time (W/F) was 18 g·hr/mol, the decomposition temperature was 800°C and the decomposition pressure was atmospheric pressure.

Gas produced upon the decomposition was analyzed and it was found that the yield of gas was 96.3%, the selectivities of hydrogen, carbon monoxide, carbon dioxide and methane were 31.4%, 48.8%, 0.7% and 19.0%, respectively, and the lower calorific value of the produced gas was 3,910 kcal/m³.

### (Example 2)

Example 1 was repeated except that the residence time (W/F) was changed to 6.0 g·hr/mol, thereby decomposing glycerin.

Gas produced upon the decomposition was analyzed and it was found that the yield of gas was 69.6%, the selectivities of hydrogen, carbon monoxide, carbon dioxide and methane were 31.4%, 50.2%, 0.6% and 17.9%, respectively, and the lower calorific value of the produced gas was 3,860 kcal/m³.

### (Example 3)

Example 1 was repeated except that the residence time (W/F) was changed to 3.0 g·hr/mol, thereby decomposing glycerin.

Gas produced upon the decomposition was analyzed and it was found that the yield of gas was 39.9%, the selectivities of hydrogen, carbon monoxide, carbon dioxide and methane were 31.3%, 51.3%, 0.5% and 16.9%, respectively, and the lower calorific value of the produced gas was 3,800 kcal/m³.

### (Example 4)

Example 1 was repeated except that Yandicoogina ore (iron content: 58%, BET specific surface area: 20 m²/g) was used in place of the Robe River ore and the residence time (W/F) was changed to 12.0 g·hr/mol, thereby decomposing glycerin.

Gas produced upon the decomposition was analyzed and it was found that the yield of gas was 70%, the selectivities of hydrogen, carbon monoxide, carbon dioxide and methane were 31.5%, 50.0%, 0.5% and 18.0%, respectively, and the lower calorific value of the produced gas was 3,860 kcal/m³.

### (Example 5)

Example 1 was repeated except that the decomposition temperature was changed to 900°C and the residence time (W/F) was changed to 12.0 g·hr/mol, thereby decomposing glycerin.

Gas produced upon the decomposition was analyzed and it was found that the yield of gas was 80%, the selectivities of hydrogen, carbon monoxide, carbon dioxide and methane were 39%, 23%, 21% and 17%, respectively, and the lower calorific value of the produced gas was 3,160 kcal/m³.

### (Example 6)

Example 1 was repeated except that Pilbara blend ore (iron content: 62%, BET specific surface area: 6 m²/g) was used in place of the Robe River ore and the residence time (W/F) was changed to 12.0 g·hr/mol, thereby decomposing glycerin.

Gas produced upon the decomposition was analyzed and it was found that the yield of gas was 76%, and the selectivities of hydrogen, carbon monoxide and methane were 49.7%, 35.0% and 15.3%, respectively, with no carbon dioxide detected. The lower calorific value of the produced gas was 3,650 kcal/m³.

### (Example 7)

Example 1 was repeated except that Carajas ore (iron content: 67%, BET specific surface area: 2 m²/g) was used in place of the Robe River ore and the residence time (W/F) was changed to 12.0 g·hr/mol, thereby decomposing glycerin.

Gas produced upon the decomposition was analyzed and it was found that the yield of gas was 81%, the selectivities of hydrogen, carbon monoxide, carbon dioxide and methane were 46.2%, 34.3%, 3.5% and 16.0%, respectively, and the lower calorific value of the produced gas was 3,600 kcal/m³.

### (Comparative Example 1)

Example 1 was repeated except that a precipitated iron catalyst (iron content: 70%, BET specific surface area: 4.1 m²/g) was used in place of the Robe River ore and the decomposition conditions were set as described below, thereby decomposing glycerin.

The decomposition conditions were set in which the residence time (W/F) expressed with the weight (W) of the iron catalyst relative to the gas flow rate (F) was 18 g·hr/mol, the decomposition temperature was 800°C and the decomposition pressure was atmospheric pressure.

Gas produced upon the decomposition was analyzed and it was found that the yield of gas was 51.3%, the selectivities of hydrogen, carbon monoxide and methane were 67.5%, 23.7% and 8.8%, respectively, and the lower calorific value of the produced gas was 3,210 kcal/m³. No carbon dioxide was detected from the produced gas.

### (Comparative Example 2)

Example 1 was repeated except that a silica-supported iron catalyst (iron content: 10%, BET specific surface area: 254 m²/g) was used in place of the Robe River ore and the decomposition conditions were set as described below, thereby decomposing glycerin.

The decomposition conditions were set in which the residence time (W/F) expressed with the weight (W) of the iron catalyst relative to the gas flow rate (F) was 18 g·hr/mol, the decomposition temperature was 800°C and the decomposition pressure was atmospheric pressure.

Gas produced upon the decomposition was analyzed and it was found that the yield of gas was 50%, the selectivities of hydrogen, carbon monoxide and methane were 29.4%, 52.5% and 18.1%, respectively, and the lower calorific value of the produced gas was 3,890 kcal/m³. No carbon dioxide was detected from the produced gas.

It was revealed from the results of Comparative Example 1 that when glycerin is decomposed over the precipitated iron catalyst, the selectivity of methane is low and the decomposability of glycerin (yield of gas) is also low, and thus the high calorific gas cannot be produced efficiently.

It was revealed from the results of Comparative Example 2 that when glycerin is decomposed over the supported iron catalyst, the decomposition rate of glycerin (yield of gas) is low, and thus the high calorific gas cannot be produced efficiently.

In contrast, it was revealed from the results of Examples 1 to 7 that when glycerin is decomposed over the iron ore, the selectivity of methane is 10% or more and the decomposition rate of glycerin (yield of gas) is also high, and thus the high calorific gas with a lower calorific value of not less than 3,000 kcal/m³ can be produced efficiently.

In particular, it was revealed from the comparison between Examples 1 to 5 and Examples 6 and 7 that when the iron ore to be used has a BET specific surface area of not less than 10 m²/g, there is the tendency in which the selectivity of methane is increased and gas having a further increased calorific value can be efficiently produced.

Furthermore, it was revealed from the comparison between Example 4 and Examples 6 and 7 that while the lower calorific value of generated gas in Examples 6 and 7 is lower than that in Example 4, owing to the iron content of not less than 60%, the yield of gas in Examples 6 and 7 is higher.

From the foregoing results, it is revealed that compared to conventional methods in which glycerin is decomposed over an iron catalyst, the high calorific gas producing method of the invention can attain 1.8 times the reaction rate and the increased yield of methane, thereby obtaining gas having a further increased calorific value.

## Claims

1. A high calorific gas producing method, comprising the step of:
decomposing glycerin at a temperature of 600 to 900°C over iron ore to thereby obtain high calorific gas with a lower calorific value of 3,000 kcal/m³ or more,
wherein the glycerin is a by-product of production of biodiesel fuel and the by-product is in the form of an aqueous glycerin solution having a glycerin content of 30% or more and a molar ratio between water and glycerin in the range of 3 to 5.

2. The high calorific gas producing method according to claim 1, wherein the iron ore has a specific surface area measured by a BET method of at least 10 m²/g.

3. The high calorific gas producing method according to claim 1 or 2, wherein the iron ore has an iron content of at least 50%.

## Patentansprüche

1. Herstellungsverfahren für ein hochkalorisches Gas, umfassend den Schritt:
Zersetzen von Glycerin bei einer Temperatur von 600 bis 900°C über Eisenerz, um dabei hochkalorisches Gas mit einem unteren Heizwert von 3 000 kcal/m³ oder mehr zu erhalten,
wobei das Glycerin ein Nebenprodukt der Herstellung von Biodieselkraftstoff ist und das Nebenprodukt in Form von einer wässrigen Glycerinlösung mit einem Glyceringehalt von 30 % oder mehr und einem Molverhältnis zwischen Wasser und Glycerin im Bereich von 3 bis 5 vorliegt.

2. Herstellungsverfahren für ein hochkalorisches Gas nach Anspruch 1, wobei das Eisenerz eine spezifische Oberfläche, gemessen durch ein BET-Verfahren von mindestens 10 m²/g, aufweist.

3. Herstellungsverfahren für ein hochkalorisches Gas nach Anspruch 1 oder 2, wobei das Eisenerz einen Eisengehalt von mindestens 50 % aufweist.

## Revendications

1. Procédé de production d'un gaz à haut pouvoir calorifique, comprenant les étapes suivantes :
la décomposition de la glycérine à une température de 600 à 900 °C sur un minerai de fer pour ainsi obtenir un gaz à haut pouvoir calorifique ayant une valeur calorifique inférieure de 3 000 kcal/m³ ou plus,
dans lequel la glycérine est un sous-produit de la production d'un carburant biodiesel et le sous-produit est sous la forme d'une solution aqueuse de glycérine présentant une teneur en glycérine de 30 % ou plus et un rapport molaire entre l'eau et la glycérine dans la plage allant de 3 à 5.

2. Procédé de production d'un gaz à haut pouvoir calorifique selon la revendication 1, dans lequel le minerai de fer présente une surface spécifique mesurée par un procédé BET d'au moins 10 m²/g.

3. Procédé de production d'un gaz à haut pouvoir calorifique selon la revendication 1 ou 2, dans lequel le minerai de fer présente une teneur en fer d'au moins 50 %.
